(19) Europäisches Patentamt
European Patent Office
Office européen des brevets

(11) **EP 4 622 362 A1**

(12) **EUROPEAN PATENT APPLICATION**
published in accordance with Art. 153(4) EPC

(43) Date of publication:
**24.09.2025 Bulletin 2025/39**

(21) Application number: **23902552.1**

(22) Date of filing: **06.12.2023**

(51) International Patent Classification (IPC):
***H04W 64/00*** (2009.01)

(52) Cooperative Patent Classification (CPC):
**H04W 64/00**

(86) International application number:
**PCT/CN2023/136685**

(87) International publication number:
**WO 2024/125355 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.12.2022 CN 202211625809**

(71) Applicant: **Huawei Technologies Co., Ltd.
Shenzhen, Guangdong 518129 (CN)**

(72) Inventors:
- **WANG, Han
  Shenzhen, Guangdong 518129 (CN)**
- **WANG, Yi
  Shenzhen, Guangdong 518129 (CN)**
- **LI, Cheng
  Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **POSITIONING INFORMATION REPORTING METHOD AND APPARATUS, AND COMPUTER READABLE STORAGE MEDIUM**

(57)     This application provides a positioning information reporting method, an apparatus, and a computer-readable storage medium. The method includes: A first network device receives a first reference signal from a second network device; and the first network device sends first information to a location management network element, where the first information is determined by measuring the first reference signal, the first information is used to calibrate a phase measurement quantity, and the phase measurement quantity is used to position a terminal device. According to the technical solutions provided in this application, positioning complexity can be reduced.

FIG. 6

## Description

This application claims priority to Chinese Patent Application No. 202211625809.4, filed with China National Intellectual Property Administration on December 16, 2022, and entitled "POSITIONING INFORMATION REPORTING METHOD, APPARATUS, AND COMPUTER-READABLE STORAGE MEDIUM", which is incorporated herein by reference in its entirety.

## TECHNICAL FIELD

This application relates to the field of wireless communication technologies, and in particular, to a positioning information reporting method, an apparatus, and a computer-readable storage medium.

## BACKGROUND

A reference station (positioning reference unit, PRU) is introduced in release 17 to assist in improving positioning performance. Specifically, a PRU at a known location may be used to measure a positioning reference signal (positioning reference signal, PRS), to construct a double-difference equation between different network devices and between a positioning terminal device and the PRU, thereby eliminating impact of a non-ideal factor and improving positioning accuracy.

However, in actual deployment, because a relative location relationship between the PRU and the positioning terminal device affects double-difference positioning performance, if double-difference carrier phase positioning needs to be performed to eliminate the impact of the non-ideal factor, it needs to be ensured that PRUs are distributed as densely as possible during deployment. Therefore, a large quantity of PRUs are required. The large quantity of PRUs need to be deployed. In addition, in a complex environment, it is difficult to select a place for the PRU and PRU maintenance costs are high.

## SUMMARY

Embodiments of this application provide a positioning information reporting method, an apparatus, and a computer-readable storage medium, to reduce positioning complexity.

According to a first aspect, this application provides a positioning information reporting method. The method may be applied to a first network device, or may be applied to an apparatus (for example, a chip, a chip system, or a circuit) in the first network device, or may be applied to an apparatus that can be used in matching with the first network device. The following uses an example in which the method is applied to the first network device for description. The method may include: A first network device receives a first reference signal from a second network device; and the first network device sends first information to a location management network element, where the first information is determined by measuring the first reference signal, the first information is used to calibrate a phase measurement quantity, and the phase measurement quantity is used to position a terminal device.

In this embodiment of this application, the network device may perform positioning information reporting. Specifically, reference signals may be received and sent between network devices (for example, base stations), to form self-loopback, and the first information is determined based on the received reference signals and reported to the location management network element, so that the location management network element can perform double-difference carrier phase solving based on the first information, to implement positioning of the terminal device. Therefore, in this embodiment of this application, the network device performs positioning information reporting, so that positioning complexity can be reduced.

In a possible implementation, before the first network device receives the first reference signal from the second network device, the positioning information reporting method further includes: The first network device receives first request information from the location management network element, where the first request information is used to request to measure the first reference signal.

In a possible implementation, that a first network device receives a first reference signal from a second network device includes: The first network device receives the first reference signal from the second network device on a reserved resource, where the reserved resource is a gap GAP symbol in a reserved slot.

In the solution provided in this application, the reserved slot may be an uplink-downlink switching slot. The first reference signal from the second network device is received on the reserved resource, so that it can be ensured that the first reference signal sent by the network device and a second reference signal sent by the terminal device are as close as possible in time domain. In this way, some non-ideal factors, such as a synchronization error and an initial phase error, that are time-sensitive (time-varying) can be eliminated by using a double-difference carrier phase method. In addition, uplink-downlink switching can be ensured, and network performance can be improved.

In a possible implementation, the positioning information reporting method further includes: The first network device sends a reference signal to the second network device, where the second network device is the first network device or a network device other than the first network device.

In the solution provided in this application, in a possible implementation, the second network device may be the first network device, that is, the first network device may send and receive the first reference signal by itself. Specifically, after receiving the first request information from the location management network element, the first network device may send and receive the first reference signal by itself. In another possible implementation, the second network device may be the network device other than the first network device. The reference signals may be received and sent between the network devices (for example, the base stations), to form self-loopback, and the first information is determined based on the received reference signals and reported to the location management network element, so that the location management network element can perform double-difference carrier phase solving based on the first information and the phase information, to implement positioning of the terminal device.

In a possible implementation, before the first network device sends the reference signal to the second network device, the positioning information reporting method further includes: The first network device receives indication information from the location management network element, where the indication information indicates the first network device to send the reference signal to the second network device.

In the solution provided in this application, after receiving the indication information from the location management network element, a plurality of network devices may send and receive signals to each other. For example, the first network device sends the first reference signal to the second network device.

In the solution provided in this application, the first network device may send the reference signal to the second network device based on the indication information from the location management network element.

In a possible implementation, the positioning information reporting method further includes: The first network device receives a second reference signal from the terminal device; the first network device measures the second reference signal to obtain phase information, and the first network device sends the phase information to the location management network element.

In the solution provided in this application, after determining the phase information based on the second reference signal, the first network device may send the phase information to the location management network element, so that the location management network element can complete double-difference carrier phase positioning based on the first information and the phase information.

In a possible implementation, the positioning information reporting method further includes: The first network device receives second request information from the location management network element, where the second request information is used to request to measure the second reference signal from the terminal device. In a possible implementation, the first information is a difference between an actual phase value and a measured phase value obtained by the first network device by measuring the first reference signal, and the actual phase value is a phase corresponding to an actual distance between the second network device and the first network device.

In a possible implementation, the measured phase value is an instantaneous measurement value or an average value of a plurality of measurements.

In a possible implementation, the first information is a phase arrival error (phase arrival error, PAE).

In a possible implementation, the first reference signal includes one or more of the following: a sounding reference signal (sounding reference signal, SRS), a positioning reference signal (positioning reference signal, PRS), and a remote interference management reference signal (remote interference management reference signal, RIM-RS).

According to a second aspect, this application provides a positioning information reporting method. The method may be applied to a location management network element, or may be applied to an apparatus (for example, a chip, a chip system, or a circuit) in the location management network element, or may be applied to an apparatus that can be used in matching with the location management network element. The following uses an example in which the method is applied to the location management network element for description. The method may include: A location management network element receives first information from a first network device, where the first information is determined based on a first reference signal, the first information is used to calibrate a phase measurement quantity, and the phase measurement quantity is used to position a terminal device; and the location management network element determines location information of the terminal device based on the first information.

In the solution provided in this application, the location management network element may perform double-difference carrier phase solving based on the first information from the network device, to implement positioning of the terminal device. In this embodiment of this application, the network device performs positioning information reporting, so that positioning complexity can be reduced.

It should be understood that an execution body of the second aspect may be the location management network element, and specific content of the second aspect corresponds to content of the first aspect. For corresponding features of the second aspect and beneficial effects achieved by the second aspect, refer to descriptions of the first aspect. To avoid repetition, detailed descriptions are properly omitted herein.

In a possible implementation, before the location management network element receives the first information from the first network device, the positioning information reporting method further includes: The location management network element sends first request information to the first network device, where the first request information is used to request to measure the first reference signal.

In a possible implementation, the positioning information reporting method further includes: The location management network element sends indication information to the first network device, where the indication information indicates the first network device to send a reference signal to a second network device, and the second network device is the first network device or a network device other than the first network device.

In a possible implementation, the positioning information reporting method further includes: The location management network element receives phase information from the first network device, where the phase information is determined based on a second reference signal; and that the location management network element determines location information of the terminal device based on the first information includes: The location management network element determines the location information of the terminal device based on the first information and the phase information.

In a possible implementation, the positioning information reporting method further includes: The location management network element sends second request information to the first network device, where the second request information is used to request to measure the second reference signal from the terminal device.

In a possible implementation, the positioning information reporting method further includes: The location management network element receives phase information obtained by measuring a third reference signal from the terminal device; and that the location management network element determines location information of the terminal device based on the first information includes: The location management network element determines the location information of the terminal device based on the first information and the phase information.

In a possible implementation, the positioning information reporting method further includes: The location management network element sends third request information to the terminal device, where the third request information is used to request the terminal device to measure the third reference signal.

In this embodiment of this application, another positioning information reporting method may be provided. To be specific, the location management network element may send, to the terminal device, request information used to request the terminal device to measure the third reference signal, so that the terminal device measures the third reference signal to obtain phase information. The location management network element may perform double-difference carrier phase solving based on the first information and the phase information, to determine the location information of the terminal device.

In a possible implementation, the first information is a difference between an actual phase value and a measured phase value obtained by the first network device by measuring the first reference signal, and the actual phase value is a phase corresponding to an actual distance between the second network device and the first network device.

In a possible implementation, the measured phase value is an instantaneous measurement value or an average value of a plurality of measurements.

In a possible implementation, the first information is a PAE.

In a possible implementation, the first reference signal includes one or more of the following: an SRS, a PRS, and a RIM-RS.

According to a third aspect, this application provides a positioning information reporting method. The method may be applied to a first network device and a location management network element, or may be applied to an apparatus (for example, a chip, a chip system, or a circuit) in the first network device and the location management network element, or may be applied to an apparatus that can be used in matching with the first network device and the location management network element. The following uses an example in which the method is applied to the first network device and the location management network element for description. The method may include: A first network device receives a first reference signal from a second network device; and the first network device sends first information to a location management network element, where the first information is determined based on the first reference signal, the first information is used to calibrate a phase measurement quantity, and the phase measurement quantity is used to position a terminal device; and the location management network element determines location information of the terminal device based on the first information.

In the solution provided in this application, the network device performs positioning information reporting. Specifically, reference signals may be received and sent between network devices (for example, base stations) on a reserved resource, to form self-loopback, and the first information is determined based on the received reference signals and reported to the location management network element, so that the location management network element can perform double-difference carrier phase solving based on the first information, to implement positioning of the terminal device. Therefore, in this embodiment of this application, the network device performs positioning information reporting, so that complexity of double-difference carrier phase positioning can be reduced.

In a possible implementation, before the first network device receives the first reference signal from the second network device, the positioning information reporting method further includes: The location management network element sends first request information to the first network device, where the first request information is used to request to measure the first reference signal.

In a possible implementation, that a first network device receives a first reference signal from a second network device includes: The first network device receives the first reference signal from the second network device on a reserved resource, where the reserved resource is a GAP symbol in a reserved slot.

In a possible implementation, the positioning information reporting method further includes: The first network device sends a reference signal to the second network device, where the second network device is the first network device or a network device other than the first network device.

In a possible implementation, before the first network device sends the reference signal to the second network device, the positioning information reporting method further includes: The location management network element sends indication information to the first network device, where the indication information indicates the first network device to send the reference signal to the second network device.

In a possible implementation, the positioning information reporting method further includes: The first network device receives a second reference signal from the terminal device; the first network device measures the second reference signal to obtain phase information; and the first network device sends the phase information to the location management network element. That the location management network element determines location information of the terminal device based on the first information includes: The location management network element determines the location information of the terminal device based on the first information and the phase information.

In a possible implementation, the positioning information reporting method further includes: The location management network element sends second request information to the first network device, where the second request information is used to request to measure the second reference signal from the terminal device.

In a possible implementation, the positioning information reporting method further includes: The location management network element receives phase information obtained by measuring a third reference signal from the terminal device; and that the location management network element determines location information of the terminal device based on the first information includes: The location management network element determines the location information of the terminal device based on the first information and the phase information.

In a possible implementation, the positioning information reporting method further includes: The location management network element sends third request information to the terminal device, where the third request information is used to request the terminal device to measure the third reference signal.

In a possible implementation, the first information is a difference between an actual phase value and a measured phase value obtained by the first network device by measuring the first reference signal, and the actual phase value is a phase corresponding to an actual distance between the second network device and the first network device.

In a possible implementation, the measured phase value is an instantaneous measurement value or an average value of a plurality of measurements.

In a possible implementation, the first information is a PAE.

In a possible implementation, the first reference signal includes one or more of the following: an SRS, a PRS, and a RIM-RS.

According to a fourth aspect, an embodiment of this application provides a communication apparatus.

For beneficial effects, refer to descriptions of the first aspect. Details are not described herein again. The communication apparatus has a function of implementing the behavior in the method instance in the first aspect. The function may be implemented by hardware, or may be implemented by hardware executing corresponding software. The hardware or the software includes one or more modules corresponding to the foregoing function.

In a possible implementation, the communication apparatus includes:

a transceiver unit, configured to receive a first reference signal from a second network device, where
the transceiver unit is configured to send first information to a location management network element, where the first information is determined by measuring the first reference signal, the first information is used to calibrate a phase measurement quantity, and the phase measurement quantity is used to position a terminal device.

In a possible implementation, before receiving the first reference signal from the second network device, the transceiver unit is further configured to receive first request information from the location management network element, where the first request information is used to request to measure the first reference signal.

In a possible implementation, when receiving the first reference signal from the second network device, the transceiver unit is specifically configured to receive the first reference signal from the second network device on a reserved resource, where the reserved resource is a gap GAP symbol in a reserved slot.

In a possible implementation, the transceiver unit is further configured to send a reference signal to the second network device, where the second network device is the first network device or a network device other than the first network device.

In a possible implementation, before sending the reference signal to the second network device, the transceiver unit is further configured to receive indication information from the location management network element, where the indication information indicates the first network device to send the reference signal to the second network device.

In a possible implementation, the transceiver unit is further configured to receive a second reference signal from the terminal device.

The communication apparatus further includes:

a processing unit, configured to measure the second reference signal to obtain phase information, and

the transceiver unit, further configured to send the phase information to the location management network element.

In a possible implementation, the transceiver unit is further configured to receive second request information from the location management network element, where the second request information is used to request to measure the second reference signal from the terminal device.

In a possible implementation, the first information is a difference between an actual phase value and a measured phase value obtained by the first network device by measuring the first reference signal, and the actual phase value is a phase corresponding to an actual distance between the second network device and the first network device.

In a possible implementation, the measured phase value is an instantaneous measurement value or an average value of a plurality of measurements.

In a possible implementation, the first information is a PAE.

In a possible implementation, the first reference signal includes one or more of the following: an SRS, a PRS, and a RIM-RS.

According to a fifth aspect, an embodiment of this application provides a communication apparatus.

For beneficial effects, refer to descriptions of the second aspect. Details are not described herein again. The communication apparatus has a function of implementing the behavior in the method instance in the second aspect. The function may be implemented by hardware, or may be implemented by hardware executing corresponding software. The hardware or the software includes one or more modules corresponding to the foregoing function.

In a possible implementation, the communication apparatus includes:

a transceiver unit, configured to receive first information from a first network device, where the first information is determined based on a first reference signal, the first information is used to calibrate a phase measurement quantity, and the phase measurement quantity is used to position a terminal device; and

a processing unit, configured to determine location information of the terminal device based on the first information.

In a possible implementation, the communication apparatus further includes:
before receiving the first information from the first network device, the transceiver unit is further configured to send first request information to the first network device, where the first request information is used to request to measure the first reference signal.

In a possible implementation, the transceiver unit is further configured to send indication information to the first network device, where the indication information indicates the first network device to send a reference signal to a second network device, and the second network device is the first network device or a network device other than the first network device.

In a possible implementation, the transceiver unit is further configured to receive phase information from the first network device, where the phase information is determined based on a second reference signal; and
when determining the location information of the terminal device based on the first information, the processing unit is specifically configured to determine the location information of the terminal device based on the first information and the phase information.

In a possible implementation, the transceiver unit is further configured to send second request information to the first network device, where the second request information is used to request to measure the second reference signal from the terminal device.

In a possible implementation, the transceiver unit is further configured to receive, from the terminal device, phase information obtained by measuring a third reference signal; and
when determining the location information of the terminal device based on the first information, the processing unit is specifically configured to determine the location information of the terminal device based on the first information and the phase information.

In a possible implementation, the transceiver unit is further configured to send third request information to the terminal device, where the third request information is used to request the terminal device to measure the third reference signal.

In a possible implementation, the first information is a difference between an actual phase value and a measured phase value obtained by the first network device by measuring the first reference signal, and the actual phase value is a phase corresponding to an actual distance between the second network device and the first network device.

In a possible implementation, the measured phase value is an instantaneous measurement value or an average value of a plurality of measurements.

In a possible implementation, the first information is a PAE.

In a possible implementation, the first reference signal includes one or more of the following: an SRS, a PRS, and a RIM-RS.

According to a sixth aspect, an embodiment of this application provides a communication apparatus.

For beneficial effects, refer to descriptions of the third aspect. Details are not described herein again. The communication apparatus has a function of implementing the behavior in the method instance in the third aspect. The function may be implemented by hardware, or may be implemented by hardware executing corresponding software. The hardware or the software includes one or more modules corresponding to the foregoing function.

In a possible implementation, the communication apparatus includes a first network device and a location management network element.

The first network device is configured to receive a first reference signal from a second network device.

The first network device is further configured to send first information to the location management network element, where the first information is determined based on the first reference signal, the first information is used to calibrate a phase measurement quantity, and the phase measurement quantity is used to position a terminal device.

The location management network element is configured to determine location information of the terminal device based on the first information.

In a possible implementation, before the first network device receives the first reference signal from the second network device, the location management network element is further configured to send first request information to the first network device, where the first request information is used to request to measure the first reference signal.

In a possible implementation, when receiving the first reference signal from the second network device, the first network device is specifically configured to receive the first reference signal from the second network device on a reserved resource, where the reserved resource is a GAP symbol in a reserved slot.

In a possible implementation, the first network device is further configured to send a reference signal to the second network device, where the second network device is the first network device or a network device other than the first network device.

In a possible implementation, before the first network device sends the reference signal to the second network device, the location management network element is further configured to send indication information to the first network device, where the indication information indicates the first network device to send the reference signal to the second network device.

In a possible implementation, the first network device is further configured to receive a second reference signal from the terminal device;

> the first network device is further configured to measure the second reference signal to obtain phase information;
> the first network device is further configured to send the phase information to the location management network element; and
> when determining the location information of the terminal device based on the first information, the location management network element is specifically configured to determine the location information of the terminal device based on the first information and the phase information.

In a possible implementation, the location management network element is further configured to send second request information to the first network device, where the second request information is used to request to measure the second reference signal from the terminal device.

In a possible implementation, the location management network element is further configured to receive, from the terminal device, phase information obtained by measuring a third reference signal; and
when determining the location information of the terminal device based on the first information, the location management network element is specifically configured to determine the location information of the terminal device based on the first information and the phase information.

In a possible implementation, the location management network element is further configured to send third request information to the terminal device, where the third request information is used to request the terminal device to measure the third reference signal.

In a possible implementation, the first information is a difference between an actual phase value and a measured phase value obtained by the first network device by measuring the first reference signal, and the actual phase value is a phase corresponding to an actual distance between the second network device and the first network device.

In a possible implementation, the measured phase value is an instantaneous measurement value or an average value of a plurality of measurements.

In a possible implementation, the first information is a PAE.

In a possible implementation, the first reference signal includes one or more of the following: an SRS, a PRS, and a RIM-RS.

According to a seventh aspect, an embodiment of this application provides a communication apparatus. The communication apparatus may be a first network device, or may be an apparatus (for example, a chip, a chip system, or a circuit) in the first network device. The communication apparatus may include a processor. The processor is coupled to a memory. The memory is configured to store a program or instructions. When the program or the instructions are executed by the processor, the communication apparatus is enabled to perform the method performed by the first network device or the apparatus in the first network device in the foregoing method embodiments.

According to an eighth aspect, an embodiment of this application provides a communication apparatus. The communication apparatus may be a location management network element, or may be an apparatus (for example, a chip, a chip system, or a circuit) in the location management network element. The communication apparatus may include a processor. The processor is coupled to a memory. The memory is configured to store a program or instructions. When the program or the instructions are executed by the processor, the communication apparatus is enabled to perform the method performed by the location management network element or the apparatus in the location management network element in the foregoing method embodiments.

According to a ninth aspect, an embodiment of this application provides a computer-readable storage medium, and the computer-readable storage medium stores a computer program or computer instructions. When the computer program or the computer instructions are run on a computer, the computer is enabled to perform the method in any one of the first aspect or the possible implementations of the first aspect, any one of the second aspect or the possible implementations of the second aspect, or any one of the third aspect or the possible implementations of the third aspect.

According to a tenth aspect, an embodiment of this application provides a computer program product including program instructions. When the computer program product is run on a computer, the computer is enabled to perform the method in any one of the first aspect or the possible implementations of the first aspect, any one of the second aspect or the possible implementations of the second aspect, or any one of the third aspect or the possible implementations of the third aspect.

According to an eleventh aspect, an embodiment of this application provides a chip system. The chip system includes a processor, configured to implement the functions in the foregoing methods. In a possible implementation, the chip system may further include a memory, configured to store program instructions and/or data. The chip system may include a chip, or may include a chip and another discrete component.

According to a twelfth aspect, an embodiment of this application provides a communication system. The communication system includes a first network device and a location management network element. When running in the communication system, the first network device and the location management network element are configured to perform any positioning information reporting method according to the first aspect to the third aspect.

## BRIEF DESCRIPTION OF DRAWINGS

To describe the technical solutions in embodiments of this application more clearly, the following briefly describes the accompanying drawings for describing embodiments.

FIG. 1 is a diagram of carrier phase ranging according to an embodiment of this application;

FIG. 2 is a diagram of double-difference carrier phase positioning according to an embodiment of this application;

FIG. 3 is a diagram of a network architecture of a mobile communication system according to an embodiment of this application;

FIG. 4 is a diagram of a network architecture of an NG-RAN according to an embodiment of this application;

FIG. 5 is a diagram of a network architecture according to an embodiment of this application;

FIG. 6 is a diagram of an interaction of a positioning information reporting method according to an embodiment of this application;

FIG. 7 is a diagram of an architecture of a first network device according to an embodiment of this application;

FIG. 8 is a diagram of a scenario of a positioning information reporting method according to an embodiment of this application;

FIG. 9 is a diagram of receiving a reference signal on a reserved resource according to an embodiment of this application;

FIG. 10 is a diagram of an interaction of another positioning information reporting method according to an embodiment of this application;

FIG. 11 is a diagram of a structure of a communication apparatus according to an embodiment of this application;

FIG. 12 is a diagram of a structure of another communication apparatus according to an embodiment of this application; and

FIG. 13 is a diagram of a structure of still another communication apparatus according to an embodiment of this application.

## DESCRIPTION OF EMBODIMENTS

In descriptions of this application, unless otherwise specified, "/" means "or". For example, A/B may indicate A or B. In this application, "and/or" describes only an association relationship between associated objects and indicates that three relationships may exist. For example, A and/or B may indicate the following three cases: Only A exists, both A and B exist, and only B exists. In addition, "at least one" may mean one or more, and "a plurality of" may mean two or more. Terms such as "first" and "second" do not limit a quantity and an execution sequence, and the terms such as "first" and "second" do not indicate a definite difference.

It should be noted that in this application, terms such as "example" or "for example" are used to represent giving an example, an illustration, or a description. Any embodiment or design scheme described as an "example" or "for example" in this application should not be understood as being more preferred or having more advantages than another embodiment or design scheme. Exactly, use of the words such as "example" or "for example" is intended to present a related concept in a specific manner.

In the descriptions of this application, the "indication" may include a direct indication and an indirect indication, or may include an explicit indication and an implicit indication. Information indicated by a piece of information (for example, indication information described below) is referred to as to-be-indicated information. In a specific implementation process, there are a plurality of manners of indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, and there is an association relationship between the indicated other information and the to-be-indicated information. For another example, only a part of the to-be-indicated information may alternatively be indicated, and the other part of the to-be-indicated information is known or pre-agreed on. In addition, specific information may alternatively be indicated by using a pre-agreed (for example, stipulated in a protocol) arrangement sequence of various pieces of information, to reduce indication overheads to some extent.

The following first provides descriptions of technical terms that may occur in embodiments of this application. Terms used in implementations of this application are only used to explain specific embodiments of this application, but are not intended to limit this application. It should be understood that definitions of the following technical terms are merely examples. For example, with continuous development of technologies, the scope of the foregoing definitions may also change. This is not limited in embodiments of this application.

(1) Carrier phase positioning

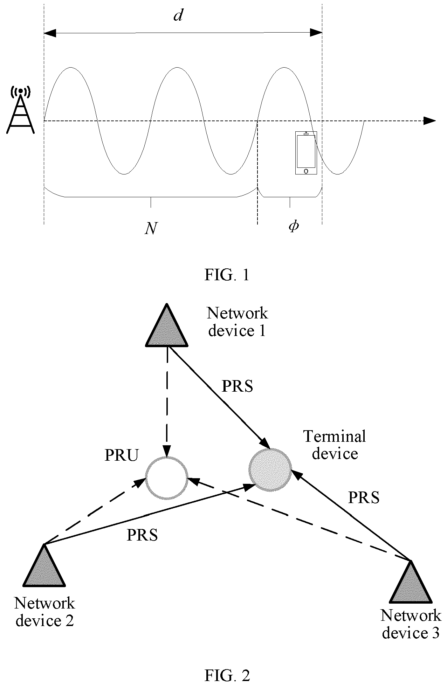

The carrier phase positioning technology is one of high-precision positioning methods, and can measure a distance with an ambiguity of whole cycles by measuring a carrier phase change of a reference signal from a transmit end to a receive end. A radio frequency signal with a frequency of 3 GHz is used as an example. A corresponding carrier wavelength is 0.1 m. Therefore, after an ambiguity of whole cycles of a carrier phase can be correctly solved, carrier phase ranging precision can reach a centimeter level to a millimeter level, to obtain a high-precision positioning result. FIG. 1 is a diagram of carrier phase ranging according to an embodiment of this application. As shown in FIG. 1, d represents a distance between a receive end and a transmit end, $\varphi$ represents a carrier phase measurement value, N represents an ambiguity of whole cycles, N is an integer and represents that N carrier whole cycles have passed, $\lambda$ represents a carrier wavelength, and a distance d and a carrier phase $\varphi$ satisfy the following:

$$d = \lambda \left( N + \frac{\varphi}{2\pi} \right)$$

(2) Double-difference carrier phase positioning

FIG. 2 is a diagram of double-difference carrier phase positioning according to an embodiment of this application. As shown in FIG. 2, a reference station (positioning reference unit, PRU) is introduced in R17 to assist in improving positioning performance. Specifically, a reference station at a known location may be used to measure a positioning reference signal (positioning reference signal, PRS), to construct a double-difference equation between different network devices (for example, base stations), thereby eliminating impact of a non-ideal factor and improving positioning accuracy.

Alternatively, the reference station may be used to perform double-difference carrier phase positioning.

A double-difference carrier phase positioning method may be as follows.

It is assumed that both a terminal device (for example, UE) and a network device have a synchronization/phase error, and a phase measured by the terminal device may be represented as:

$$\varphi_t^{(i)} = \left(-2\pi f\left(\tau_t^{(i)} + \Delta_t^{(i)}\right) - \left(\phi_t - \phi^{(i)}\right)\right) - 2\pi N_t^{(i)}$$

$\tau_t^{(i)}$ represents a transmission delay between the terminal device and a network device $i$, $\Delta_t^{(i)}$ represents a time synchronization error between the terminal device and the network device $i$, $\phi_t$ and $\phi^{(i)}$ respectively represent random initial phase errors of the terminal device and the network device $i$, and $N_t^{(i)}$ represents a phase ambiguity of whole cycles between the terminal device and the network device i.

Subtracting is performed between different network devices to obtain a phase difference of arrival (phase difference of arrival, PDOA):

$$\varphi_t^{(ij)} = \left(\varphi_t^{(j)} - \varphi_t^{(i)}\right) = \left(-2\pi f\left(\tau_t^{(ij)} + \Delta^{(ij)}\right) - \phi^{(ij)}\right) - 2\pi N_t^{(ij)}$$

The random initial phase $\phi_t$ of the terminal device may be eliminated. Similarly, for the PRU, the PDOA may be measured:

$$\varphi_p^{(ij)} = \left(\varphi_p^{(j)} - \varphi_p^{(i)}\right) = \left(-2\pi f\left(\tau_p^{(ij)} + \Delta^{(ij)}\right) - \phi^{(ij)}\right) - 2\pi N_p^{(ij)}$$

Then, subtracting may be performed between the terminal device and the PRU to obtain a double-difference PDOA:

$$\varphi_{tp}^{(ij)} = \left(\varphi_t^{(ij)} - \varphi_p^{(ij)}\right) = \left(-2\pi f \tau_{tp}^{(ij)}\right) - 2\pi N_{tp}^{(ij)}$$

A random initial phase $\phi^{(i)}$ and the time synchronization error $\Delta^{(ij)}$ on the network device side may be eliminated, to obtain $\varphi_{tp}^{(ij)}$. A plurality of measurement values of the double-difference PDOA may be obtained based on a plurality of pieces of network device information, and a to-be-positioned terminal device location may be obtained through calculation based on a known PRU location and a network device location according to simultaneous equations.

First, for ease of understanding embodiments of this application, a technical problem specifically to be resolved in this application is further proposed and analyzed. Currently, implementation of double-difference carrier phase positioning includes a plurality of technical solutions. The following examples are listed below. As described above, a PRU is introduced in R17 to assist in improving positioning performance. However, in actual deployment, because a relative location relationship between the PRU and a positioning terminal device affects double-difference positioning performance, if double-difference carrier phase positioning needs to be performed to eliminate impact of a non-ideal factor, it needs to be ensured that PRUs are distributed as densely as possible during deployment. Therefore, a large quantity of PRUs are required. The large quantity of PRUs need to be deployed. In addition, in a complex environment, it is difficult to select a place for the PRU and PRU maintenance costs are high.

Based on a problem that implementation costs of double-difference carrier phase positioning are high due to PRU deployment, embodiments of this application can implement beacon-free double-difference carrier phase positioning, thereby reducing complexity of double-difference carrier phase positioning.

It should be understood that the technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications (universal mobile telecommunications system, UMTS) system, an enhanced data rate for GSM evolution (enhanced data rate for GSM evolution, EDGE) system, and a worldwide interoperability for microwave access (worldwide interoperability for microwave access, WiMAX) system. The technical solutions in embodiments of this application may be further applied to another communication system, for example, a public land mobile network (public land mobile network, PLMN) system, an advanced long term evolution (LTE advanced, LTE-A) system, a 5th generation mobile communication (the 5th generation, 5G) system, a new radio (new radio, NR) system, an open access network (open RAN, ORAN) system, a machine to machine (machine to machine, M2M) system, or another future evolved communication system. This is not limited in embodiments of this application. The technical solutions provided in embodiments of this application may be further applied to another communication system, as long as an entity in the communication system can send control information and send (and/or receive) a transport block, and another entity in the communication system can receive control information and receive (and/or send) a transport block.

The technical solutions in embodiments of this application may be further applied to scenarios such as a factory, an automatic parking, an automated guided vehicle (automated guided vehicle, AGV), self-driving, and indoor high-precision positioning.

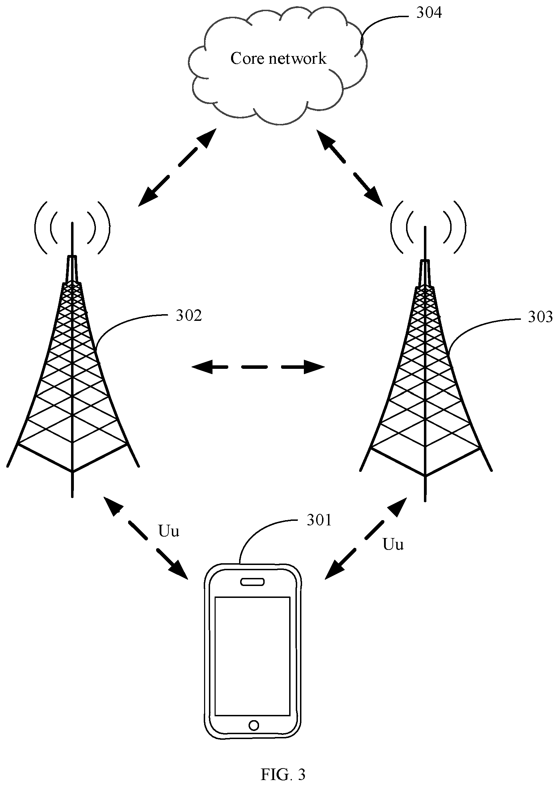

FIG. 3 is a diagram of a network architecture of a mobile communication system according to an embodiment of this application. As shown in FIG. 3, the mobile communication system may include at least one network device (a network device 302 and a network device 303 shown in FIG. 3) and a core network device 304. Optionally, the communication system may further include a terminal device 301. A serving network device of the terminal device 301 may be the network device 302 and/or the network device 303, and the terminal device 301 is separately connected to the network device 302 and/or the network device 303 through a Uu interface. The at least one network device may receive and send a reference signal to each other, so that the network device generates first information used to calibrate a phase measurement quantity based on the received reference signal, and updates the first information to the core network device 304. The network device and the core network device 304 may be different physical devices independent of each other; functions of the core network device 304 and logical functions of the network device may be integrated into a same physical device; or some functions of the core network device 304 and some functions of the network device may be integrated into one physical device. The terminal device may be located at a fixed position, or may be mobile.

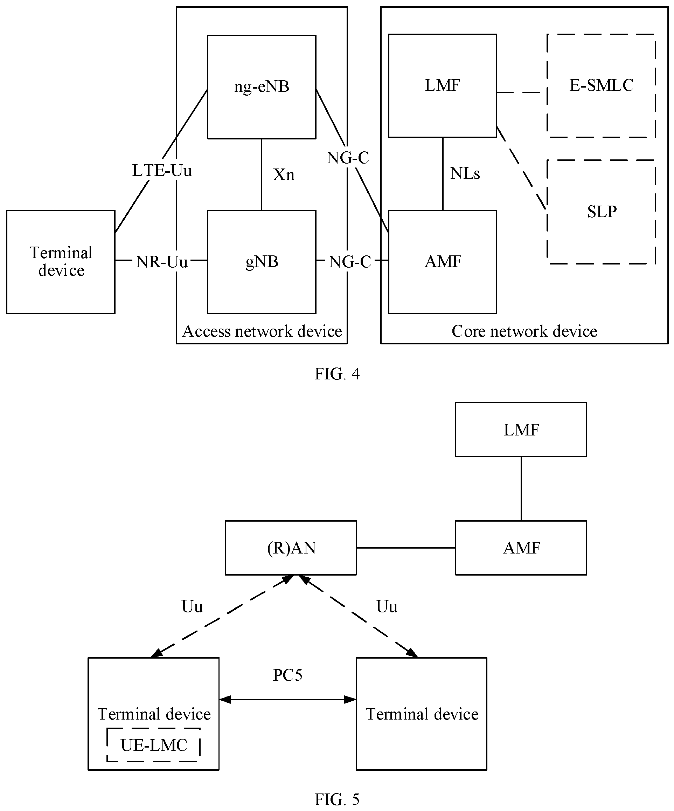

Further, FIG. 4 is a diagram of a network architecture of an NG-RAN (next-generation-radio access network) according to an embodiment of this application. As shown in FIG. 4, an access network device may include a 4G ng-eNB and a 5G gNB, and a terminal device is connected to the ng-eNB and the gNB through an LTE-Uu interface and an NR-Uu interface, respectively. The ng-eNB is a device or an apparatus that is deployed in a radio access network and that meets a 4G standard and provides a wireless communication function for the terminal device. The ng-eNB may be a base station, an access point, or the like in various forms. The ng-eNB may alternatively be a transmission and reception point (transmission and reception point, TRP) for receiving and sending a reference signal. The gNB may be a device or an apparatus that is deployed in a radio access network and that meets a 5G standard and provides a wireless communication function for the terminal device. The gNB may be a base station, an access point, or the like in various forms. The gNB may alternatively be a TRP for receiving and sending a reference signal, a transmission measurement function (transmission measurement function, TMF), or the like. A core network device may include an access and mobility management function (access and mobility management function, AMF) network element and a location management function (location management function, LMF). The access network device may be connected to the core network device through an NG-C interface. For example, the access network device may be connected to an AMF network element in the core network device through an NG-C interface. Optionally, the core network device may further include an enhanced serving mobile location center (enhanced serving mobile location center, E-SMLC) and a service positioning protocol (service location protocol, SLP). The E-SMLC may be a network element, a module, or a component that provides a positioning function in a 4G core network. The SLP may be a network element, a module, or a component that processes a user plane security positioning protocol in the 4G core network.

Further, FIG. 5 is a diagram of a network architecture according to an embodiment of this application. As shown in FIG. 5, in a positioning scenario, a terminal device may send a positioning service request to an access network device, and the access network device forwards the positioning service request of the terminal device to an access and mobility management function (access and mobility management function, AMF) network element in a core network. After receiving the positioning service request, the AMF network element may send the request to an LMF network element, and the LMF network element is responsible for processing the received positioning request and initiating a related positioning procedure. Optionally, the terminal device may further include a user equipment location management function (user equipment location management component, UE-LMC). The UE-LMC is a possible deployment manner, and is a component/application that has some LMF functions and that is deployed on the terminal device, and is configured to support a positioning service on a PC5 interface.

It should be noted that embodiments of this application may be further applied to communication between a remote terminal (Remote UE) and a relay terminal (Relay UE) in a terminal-to-network relay (UE-to-network relay) scenario, may be further applied to communication between a source terminal (source UE) and a relay terminal (relay UE) in a terminal-to-terminal relay (UE-to-UE relay) scenario, and may be further applied to communication between a relay terminal (relay UE) and a target terminal (target UE). In embodiments of this application, an example in which the method is applied to an NR communication scenario is used for description, and an application scenario is not limited.

The terminal device in embodiments of this application may also be referred to as a terminal, user equipment (user equipment, UE), a mobile station, a mobile terminal, or the like, or may be a chip, a module, or a unit that implements some functions of the terminal device. The terminal device may be widely used in various communication scenarios, for example, device-to-device (device-to-device, D2D) communication, vehicle-to-everything (vehicle-to-everything, V2X) communication, machine type communication (machine type communication, MTC), an internet of things (internet of things, IOT), virtual reality, augmented reality, industrial control, self-driving, telemedicine, a smart grid, smart furniture, smart office, smart wearable, smart transportation, or a smart city. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A device form of the terminal is not limited in this disclosure.

It may be understood that the terminal device may include one or more antennas. In addition, the terminal device may additionally include a transmitter and a receiver. Persons of ordinary skill in the art may understand that both the transmitter and the receiver may include a plurality of components (for example, processors, modulators, multiplexers, demodulators, demultiplexers, or antennas) related to signal transmission and reception.

The network device in embodiments of this application is an entity configured to transmit or receive a signal, and may be a device configured to communicate with a terminal. The network device may be an access network device. The access network device includes but is not limited to a base station (base station) in the communication system, an evolved base station (evolved base station, base station), a transmission and reception point (transmission and reception point, TRP), a next generation base station (next generation base station, gNB) in a 5G mobile communication system, a next generation base station in a 6th generation (6th generation, 6G) mobile communication system, an access network device in an open access network ORAN (open RAN, ORAN) system or a module of the access network device, a base station in a future mobile communication system, an access node in a Wi-Fi system, or the like. The network device may alternatively be a chip, a module, or a unit that can implement some functions of the base station. In a network structure, the network device may include a central unit (central unit, CU) node, or a distributed unit (distributed unit, DU) node, or a RAN device including a CU node and a DU node. In the ORAN system, the CU may alternatively be referred to as an O-CU, and the DU may alternatively be referred to as an O-DU.

The access network device may be a macro base station, a micro base station, or an indoor base station, a relay node or a donor node, or a radio controller in a cloud radio access network (cloud radio access network, CRAN) scenario. Optionally, the access network device may alternatively be a server, a wearable device, a vehicle-mounted device, or the like. For example, an access network device in a vehicle-to-everything (vehicle-to-everything, V2X) technology may be a road side unit (road side unit, RSU). A plurality of access network devices in the communication system may be base stations of a same type, or may be base stations of different types. The base station may communicate with a terminal, or may communicate with the terminal through a relay station. The terminal may communicate with a plurality of base stations of different access technologies.

The access network device and/or the terminal may be fixed or movable. The access network device and/or the terminal may be deployed on land, including an indoor or outdoor device, or a handheld or vehicle-mounted device; may be deployed on water; or may be deployed on an airplane, a balloon, and an artificial satellite in air. Application scenarios of the access network device and the terminal are not limited in this disclosure. The access network device and the terminal device may be deployed in a same scenario or different scenarios. For example, the access network device and the terminal device are both deployed on land; or the access network device is deployed on land, and the terminal device is deployed on water. Examples are not enumerated one by one.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

It should be noted that a quantity and a type of network devices and terminal devices in the network architecture shown in FIG. 3 are merely examples, and embodiments of this application are not limited thereto. For example, more or fewer first terminal devices that communicate with the network device may be further included. For example, more or fewer terminal devices that communicate with the network device may be further included. For example, one or more network devices and one or more terminal devices may be included. A single network device may transmit data or control signaling to one or more terminal devices, or a plurality of network devices may simultaneously transmit data or control signaling to a single terminal device. For brevity of description, details are not described in the accompanying drawings. In addition, in the network architecture shown in FIG. 3, although the network device, the terminal device, and the core network device are shown, the application scenario may include but is not limited to the network device, the terminal device, and the core network device. For example, the application scenario may further include a device configured to bear a virtualized network function. These are clear to persons skilled in the art, and details are not described herein.

This application provides a plurality of positioning information reporting methods. The following separately describes the methods by using the following embodiments. Some of the positioning information reporting methods are only for some procedures, and some may be applied to any one or more procedures. It should be understood that the positioning information reporting methods may be used in combination with each other.

It should be understood that the positioning information reporting method may change with evolution of the technical solution, and the technical solution provided in this application is not limited to a process described below. Further, descriptions of the scenarios in embodiments of this application are merely examples, and the solutions in embodiments of this application are not limited to being applicable to only the described scenarios, and are also applicable to a scenario in which a similar problem exists.

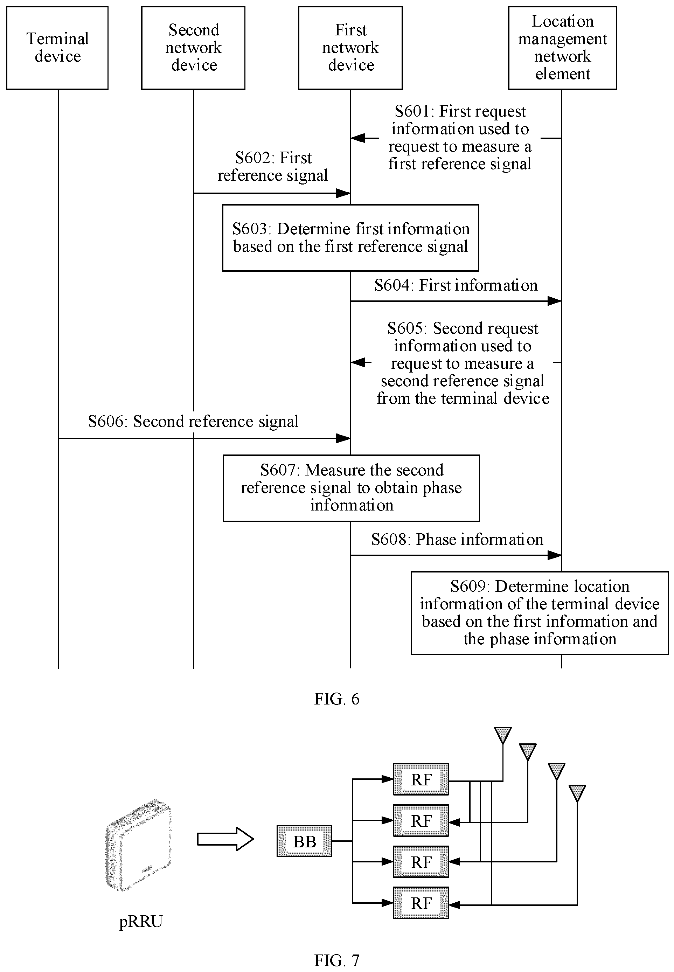

A first network device in the following embodiments (for example, the following embodiments corresponding to FIG. 6 to FIG. 9) may be the access network device in the network architecture shown in FIG. 4. In this embodiment, a function performed by the first network device may alternatively be performed by an apparatus (for example, a chip, a chip system, or a circuit) in the first network device. A location management network element in the following embodiments may be the LMF network element in the network architecture shown in FIG. 4. In this embodiment, a function performed by the location management network element may alternatively be performed by an apparatus (for example, a chip, a chip system, or a circuit) in the location management network element. Embodiments of this application are uniformly described herein, and details are not described below again.

The following describes a positioning information reporting method according to an embodiment of this application. FIG. 6 is a diagram of an interaction of a positioning information reporting method according to an embodiment of this application. The positioning information reporting method shown in FIG. 6 is used for uplink. As shown in FIG. 6, the positioning information reporting method may include steps S601 to S609.

S601: A location management network element sends first request information to a first network device, where the first request information is used to request to measure a first reference signal. Correspondingly, the first network device receives the first request information from the location management network element.

The first request information may include configuration information of the first reference signal. For example, the configuration information may be information such as a time-frequency resource and a period of the first reference signal.

The first reference signal may include one or more of the following: an SRS, a PRS, and a RIM-RS. A type of the first reference signal is not limited in this embodiment.

The first network device may be a device or an apparatus that is deployed in a radio access network and that meets a 4G standard and provides a wireless communication function for the terminal device, for example, a ng-eNB. The ng-eNB may alternatively be a transmission and reception point (transmission and reception point, TRP) for receiving and sending a reference signal. The first network device may alternatively be a device or an apparatus that is deployed in a radio access network and that meets a 4G standard and provides a wireless communication function for the terminal device, for example, a gNB. The gNB may alternatively be a TRP for receiving and sending a reference signal, a transmission measurement function (transmission measurement function, TMF), or the like. The first network device may alternatively be a pico base station device (pico rru, pRRU), or the like. A name of the first network device is not limited in this embodiment of this application.

In a possible implementation, the location management network element may communicate with the first network device by using an NR positioning protocol A (NR positioning protocol A, NRPPa).

In an embodiment, the first network device may have a plurality of channels. Herein, four channels are used as an example for description. It is assumed that the first network device has four channels, where one channel may be used to send a signal, and the other three channels are used to receive a signal; or all the four channels are used to receive a signal. It should be noted that an architecture of the first network device may support loop receiving and sending. Specifically, FIG. 7 is a diagram of an architecture of the first network device according to an embodiment of this application. As shown in FIG. 7, an example in which the first network device is a pRRU is used for description. The first network device receives and sends a signal based on a baseband (baseband, BB) and four radio frequency (radio frequency, RF) channels, to support loop receiving and sending.

Further, the first network device may further send a reference signal to a second network device, and the second network device may be the first network device or a network device other than the first network device.

In a possible implementation, the second network device is the first network device, that is, the first network device may send and receive the first reference signal by itself. Specifically, after receiving the first request information from the location management network element, the first network device may send and receive the first reference signal by itself.

In another possible implementation, the second network device is the network device other than the first network device. Specifically, after receiving the first request information from the location management network element, the first network device may send, to the second network device, request information used to request the second network device to send the first reference signal to the first network device. After receiving the request information, the second network device sends the first reference signal to the first network device.

Further, optionally, the first network device may receive indication information from the location management network element, where the indication information indicates the first network device to send the reference signal to the second network device. After receiving the indication information, the first network device may send the reference signal to the second network device, so that the second network device may also determine, based on the reference signal, and send, to the location management network element, calibration information of a measurement quantity used to position the terminal device, and the location management network element determines location information of the terminal device based on the calibration information of the measurement quantity used to position the terminal device. In this way, the location management network element can determine a location of the terminal device based on calibration information that is of measurement quantities used for positioning and that are reported by a plurality of network devices, thereby improving accuracy of determining the location of the terminal device.

Optionally, before the location management network element sends the first request information to the first network device, the location management network element may obtain information about the plurality of network devices (including the first network device and the second network device). The information may include cell information, coordinates, a TRP ID of an NG-RAN TRP, a PRS configuration, and the like.

S602: The second network device sends the first reference signal to the first network device. Correspondingly, the first network device receives the first reference signal from the second network device.

The first network device receives the first reference signal from the second network device. Specifically, the first network device may receive the first reference signal from the second network device on a reserved resource. The reserved resource may be a gap GAP symbol in a reserved slot. The reserved slot may be an uplink-downlink switching slot. The first reference signal from the second network device is received on the reserved resource, so that it can be ensured that the first reference signal sent by the network device and a second reference signal sent by the terminal device are as close as possible in time domain. In this way, some non-ideal factors, such as a synchronization error and an initial phase error, that are time-sensitive (time-varying) can be eliminated by using a double-difference carrier phase method. In addition, uplink-downlink switching can be ensured, thereby improving network performance.

S603: The first network device determines first information based on the first reference signal.

After receiving the first reference signal from the second network device, the first network device may determine the first information based on the first reference signal. The first information may be used to calibrate a phase measurement quantity, and the phase measurement quantity may be used to position the terminal device.

In a possible implementation, the first information may be a difference between an actual phase value and a measured phase value obtained by the first network device by measuring the first reference signal, and the actual phase value is a phase corresponding to an actual distance between a network device different from the first network device and the first network device. It may be understood that the first network device may obtain the measured phase value by measuring the first reference signal, then obtain the actual phase value based on the actual distance between the network device different from the first network device and the first network device, and calculate a phase calibration quantity, that is, the first information, by performing subtracting on the measured phase value and the actual phase value. For example, the first network device measures the first reference signal from the second network device (the second network device and the first network device are different network devices) to obtain the measured phase value, obtains the actual phase value based on the actual distance between the second network device and the first network device, and obtains the first information by performing subtracting on the measured phase value and the actual phase value.

In an embodiment, the first information may be a phase arrival error (phase arrival error, PAE), and the first information may also be referred to as a phase calibration quantity. A calculation formula of the PAE may be as follows:

$$PAE_i = POA_i - POA_{true\_i}$$

$$POA_{true\_i} = \frac{d_i}{\lambda} \times 2\pi$$

*POA$_i$* may represent a measured phase value obtained by the first network device by measuring a reference signal from an $i$th network device, *POA$_{true\_i}$* represents an actual phase value corresponding to an actual distance between the first network device and the $i$th network device, $d_i$ represents a distance between the first network device and the $i$th network device, and $\lambda$ represents a carrier wavelength. In an embodiment, the $i$th network device may be the second network device different from the first network device.

Optionally, a calculation formula of the PAE may alternatively be as follows:

$$PAE_{ij} = PDOA_{ij} - PDOA_{true\_ij}$$

$$PDOA_{ij} = POA_i - POA_j$$

$$PDOA_{true\_ij} = \frac{(d_i - d_j)}{\lambda} \times 2\pi$$

*PDOA$_{ij}$* may represent a measured phase difference between a measured phase value obtained by the first network device by measuring a reference signal from an $i$th network device and a measured phase value obtained by the first network device by measuring a reference signal from a $j$th network device, *PDOA$_{true}$* represents an actual phase difference between an actual phase value corresponding to an actual distance between the first network device and the $i$th network device and an actual phase value corresponding to an actual distance between the first network device and the $j$th network device, $d_i$ and $d_j$ are respectively a distance between the first network device and the $i$th network device and a distance between the first network device and the $j$th network device, and $\lambda$ represent a carrier wavelength. In an embodiment, the $i$th network device may be the second network device different from the first network device, and the $j$th network device may be a third network device different from the first network device and the second network device.

In a possible implementation, the measured phase value may be an instantaneous measurement value or an average value of a plurality of measurements. For example, the first network device may separately determine a plurality of measured phase values based on a plurality of first reference signals from the second network device, and use a difference between an average value of the plurality of measured phase values and an actual phase value as the first information reported to the location management network element.

The foregoing actual phase value may be determined in any one of the following implementations.

In a first possible implementation, the first network device obtains, through calculation based on locations of the first network device and the second network device, a phase corresponding to an actual distance between the first network device and the second network device.

In a second possible implementation, the location management network element may obtain, through calculation based on locations of the first network device and the second network device, a phase corresponding to an actual distance between the first network device and the second network device, and send the phase to the first network device.

S604: The first network device sends the first information to the location management network element. Correspondingly, the location management network element receives the first information from the first network device.

After determining the first information based on the first reference signal, the first network device may send the first information to the location management network element, so that the location management network element may perform carrier phase calibration based on the first information, to complete double-difference carrier phase positioning.

S605: The location management network element sends second request information to the first network device, where the second request information is used to request to measure the second reference signal from the terminal device. Correspondingly, the first network device receives the second request information from the location management network element.

In a possible implementation, the second reference signal may be an SRS.

Optionally, the location management network element may obtain a capability of the terminal device by using an LPP capability transfer process, including an uplink second reference signal capability of the terminal device. The location management network element may request the first network device to configure the terminal device to send the second reference signal. The first network device determines a second reference signal resource, and configures configuration information of the second reference signal for the terminal device.

S606: The terminal device sends the second reference signal to the first network device. Correspondingly, the first network device receives the second reference signal from the terminal device.

The terminal device may send the second reference signal to the first network device based on the configuration information of the second reference signal that is configured by the first network device.

S607: The first network device measures the second reference signal to obtain phase information.

After receiving the second reference signal from the terminal device, the first network device may determine the phase information based on the second reference signal. The phase information may be used by the location management network element to position the terminal device.

The first network device determines the phase information based on the second reference signal. Specifically, the phase information may be a difference between an actual phase value and a measured phase value obtained by the first network device by measuring the second reference signal. The actual phase value may be a phase corresponding to an actual distance between the terminal device and the first network device. It may be understood that the first network device may obtain the measured phase value by measuring the second reference signal, then obtain the actual phase value based on the actual distance between the terminal device and the first network device, and calculate the phase information by performing subtracting on the measured phase value and the actual phase value.

In an embodiment, the phase information may be a phase arrival error (phase arrival error, PAE), and the phase information may also be referred to as a phase calibration quantity. A calculation formula of the PAE may be as follows:

$$PAE_i = POA_i - POA_{true\_i}$$

$$POA_{true\_i} = \frac{d_i}{\lambda} \times 2\pi$$

$POA_i$ may represent a measured phase value obtained by the first network device by measuring a reference signal from an $i$th terminal device, $POA_{true\_i}$ represents an actual phase value corresponding to an actual distance between the first network device and the $i$th terminal device, $d_i$ represents a distance between the first network device and the $i$th terminal device, and $\lambda$ represents a carrier wavelength.

Optionally, a calculation formula of the PAE may alternatively be as follows:

$$PAE_{ij} = PDOA_{ij} - PDOA_{true\_ij}$$

$$PDOA_{ij} = POA_i - POA_j$$

$$PDOA_{true\_ij} = \frac{(d_i - d_j)}{\lambda} \times 2\pi$$

$PDOA_{ij}$ may represent a measured phase difference between a measured phase value obtained by the first network device by measuring a reference signal from an $i$th terminal device and a measured phase value obtained by the first network device by measuring a reference signal from a $j$th terminal device, $PDOA_{true}$ represents an actual phase difference between an actual phase value corresponding to an actual distance between the first network device and the $i$th terminal device and an actual phase value corresponding to an actual distance between the first network device and the $j$th terminal device, $d_i$ and $d_j$ are respectively a distance between the first network device and the $i$th terminal device and a distance between the first network device and the $j$th terminal device, and $\lambda$ represent a carrier wavelength.

In a possible implementation, the measured phase value may be an instantaneous measurement value or an average value of a plurality of measurements. For example, the first network device may separately determine a plurality of measured phase values based on a plurality of second reference signals from the terminal device, and use a difference between an average value of the plurality of measured phase values and an actual phase value as the phase information reported to the location management network element.

The foregoing actual phase value may be determined in any one of the following implementations.

In a first possible implementation, the first network device obtains, through calculation based on locations of the first network device and the terminal device, a phase corresponding to an actual distance between the first network device and the terminal device.

In a second possible implementation, the location management network element may obtain, through calculation based on locations of the first network device and the terminal device, a phase corresponding to an actual distance between the first network device and the terminal device, and send the phase to the first network device.

S608: The first network device sends the phase information to the location management network element. Correspondingly, the location management network element receives the phase information from the first network device.

After determining the phase information based on the second reference signal, the first network device may send the phase information to the location management network element, so that the location management network element can complete double-difference carrier phase positioning based on the first information and the phase information.

S609: The location management network element determines the location information of the terminal device based on the first information and the phase information.

It may be understood that, the location management network element implements the double-difference carrier phase positioning method based on the first information and the phase information. For details, refer to the detailed description of double-difference carrier phase positioning in the foregoing technical term description part. Details are not described herein again.

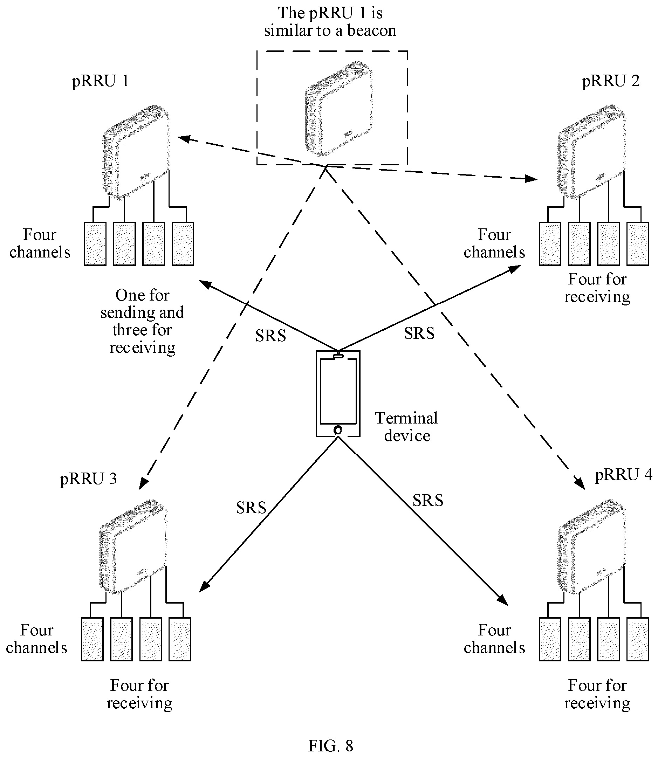

The following provides an example with reference to the foregoing steps S601 to S609. FIG. 8 is a diagram of a scenario of a positioning information reporting method according to an embodiment of this application. As shown in FIG. 8, the scenario may include a plurality of network devices (for example, four pRRUs, which are respectively a pRRU 1 to a pRRU 4). It is assumed that the pRRUs each have four channels. One channel of the pRRU 1 is used to send a reference signal, the other three channels are used to receive the reference signal, and four channels of each of the other three pRRUs are all used to receive the reference signal. An architecture of the pRRU 1 may support loop receiving and sending. The pRRU may receive, on a reserved resource, a reference signal from the pRRU itself or another pRRU. The first network device may be any one of the plurality of pRRUs.

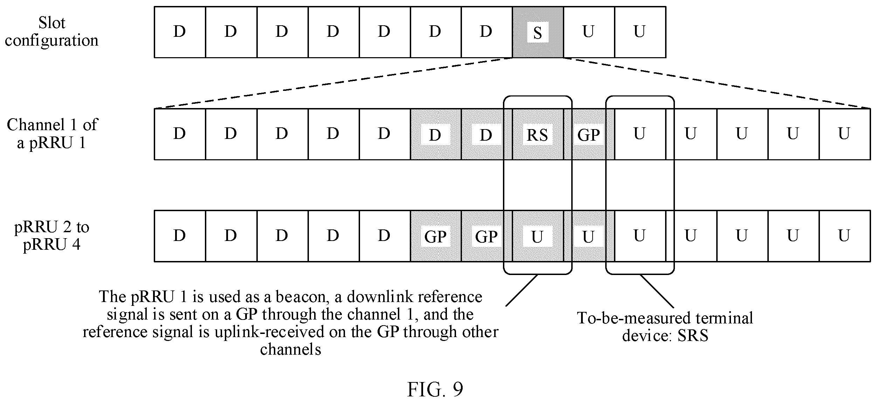

For example, FIG. 9 is a diagram of receiving a reference signal on a reserved resource according to an embodiment of this application. As shown in FIG. 9, it is assumed that an uplink-downlink slot configuration is 2:8, and a plurality of network devices receive and send signals on a GAP symbol in a self-contained slot (self-contained slot). To ensure uplink-downlink switching, there needs to be an interval between symbols occupied by sending a reference signal by a pRRU 1 and sending a second reference signal (for example, an SRS) by a terminal device. In addition, it is considered that an interval between sending the reference signal by the pRRU 1 and sending the SRS by the terminal device needs to be as small as possible for double-difference, to eliminate impact of a non-ideal factor that has a high time requirement. Therefore, a location of receiving and sending a signal between pRRUs may be shown in FIG. 9. A reference signal is sent through a first channel of the pRRU 1, and a location is on an eighth GAP symbol in an S slot. Other three channels of the pRRU 1 and four channels of each of the other three pRRUs may receive, on the symbol, the reference signal (such as an SRS, a PRS, and a RIM-RS) sent by the pRRU 1. It should be noted that, sending in polling mode may be performed between the plurality of pRRUs. In other words, the pRRU 1 to the pRRU 4 may send reference signals in polling mode, and then precision of a phase calibration quantity is improved through averaging, filtering, or the like.

The location of the pRRU 1 is known and the reference signal is sent to the four pRRUs. In this case, the pRRU 1 may be used as a beacon. In addition, the terminal device sends the SRS to the four pRRUs, to form double-difference positioning. Each pRRU may report, to the location management network element (for example, an LMF network element), phase information of a measured signal from the terminal device and first information of the reference signal from the pRRU 1, so that the LMF network element can perform double-difference carrier phase positioning.

It should be understood that sequence numbers of the foregoing processes do not mean execution sequences in this embodiment. The execution sequences of the processes should be determined based on functions and internal logic of the processes, and should not be construed as any limitation on the implementation processes of embodiments of this application.

In the solution provided in this embodiment, an uplink beacon-free double-difference carrier phase positioning method is designed. Specifically, reference signals may be received and sent between network devices (for example, base stations) on a reserved resource, to form self-loopback, the first information (for example, the phase calibration quantity PAE) is determined based on the received reference signals and reported to the location management network element, and the phase information is determined based on the reference signal from the terminal device and is reported to the location management network element, so that the location management network element can perform double-difference carrier phase solving based on the first information and the phase information, to implement positioning of the terminal device. Therefore, in this embodiment of this application, different network devices may be separately considered as beacons/reference stations to achieve a beacon-free objective, to implement beacon-free double-difference carrier phase positioning, thereby reducing complexity of double-difference carrier phase positioning.

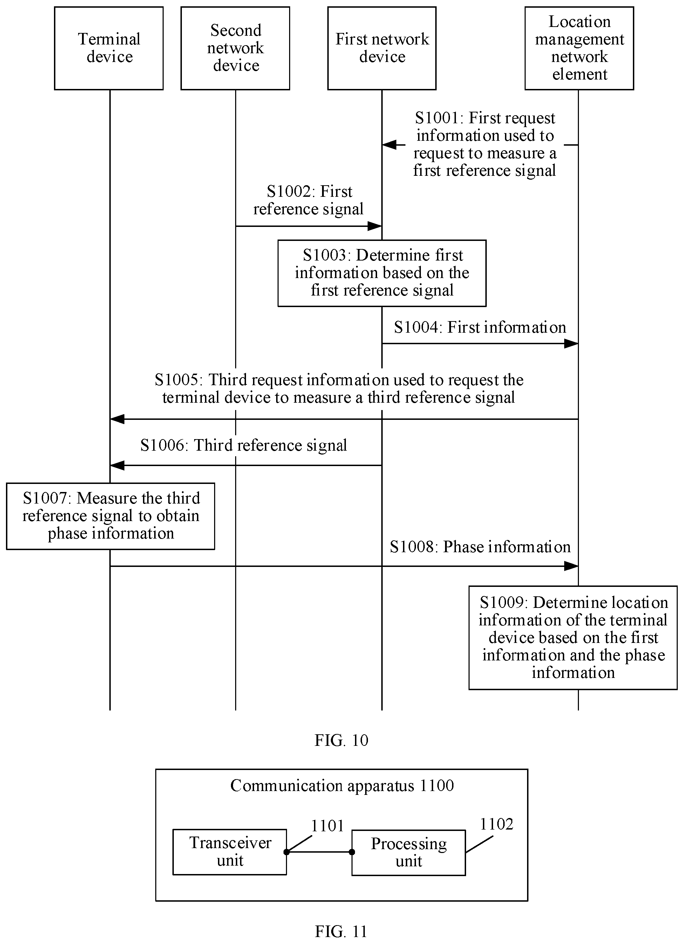

The following describes another communication method provided in an embodiment of this application. It should be understood that, for explanations of terms in different embodiments of this application, refer to each other. To avoid redundant descriptions, a same term may not be described in different embodiments. FIG. 10 is a diagram of an interaction of another positioning information reporting method according to an embodiment of this application. As shown in FIG. 10, different from the uplink in FIG. 6, the method shown in FIG. 10 is used for downlink. The positioning method may include S1001 to S1009.

S1001: A location management network element sends first request information to a first network device, where the first request information is used to request to measure a first reference signal. Correspondingly, the first network device receives the first request information from the location management network element.

S1002: A second network device sends the first reference signal to the first network device. Correspondingly, the first network device receives the first reference signal from the second network device.

S1003: The first network device determines first information based on the first reference signal.

S1004: The first network device sends the first information to the location management network element. Correspondingly, the location management network element receives the first information from the first network device.

It may be understood that, for specific descriptions of steps S1001 to S1004, refer to the foregoing steps S601 to S604. To avoid repetition, details are not described herein again.

S1005: The location management network element sends third request information to a terminal device, where the third request information is used to request the terminal device to measure a third reference signal. Correspondingly, the terminal device receives the third request information from the location management network element.

In a possible implementation, the third reference signal may be a PRS. The location management network element requests the terminal device to measure the PRS, for example, the measurement may include a downlink reference signal time difference (downlink reference signal time difference, DL RSTD), a downlink reference signal received power (downlink reference signal Received power, DL RSRP), and the like.

Further, optionally, the location management network element may obtain a capability of the terminal device by using an LPP capability transfer process, including a downlink positioning reference signal (downlink-positioning reference signal, DL-PRS) resource and a DL-PRS processing capability. Further, the location management network element may further obtain information about a plurality of network devices (including the first network device and the second network device). The information may include cell information, coordinates, a TRP ID of an NG-RAN TRP, a PRS configuration, and the like.

Before sending the third request information to the terminal device, the location management network element may provide assistance data for the terminal device. The assistance data may include cell information, a third reference signal configuration, and other information used by the terminal device to measure the third reference signal.

S1006: The first network device sends the third reference signal to the terminal device. Correspondingly, the terminal device receives the third reference signal from the first network device.

The location management network element may send, to the first network device, indication information indicating the first network device to send the third reference signal to the terminal device, and the first network device sends the third reference signal to the terminal device based on the indication information.

S1007: The terminal device measures the third reference signal to obtain phase information.

After receiving the third reference signal from the first network device, the terminal device may measure the third reference signal to obtain the phase information. Specifically, after receiving the third reference signal from the first network device, the terminal device may determine the phase information based on the third reference signal. The phase information may be used by the location management network element to position the terminal device. The phase information may be a difference between an actual phase value and a measured phase value obtained by the terminal device by measuring the third reference signal. The actual phase value may be a phase corresponding to an actual distance between the terminal device and the first network device. It may be understood that the terminal device may obtain the measured phase value by measuring the third reference signal, then obtain the actual phase value based on the actual distance between the terminal device and the first network device, and calculate the phase information by performing subtracting on the measured phase value and the actual phase value.

In an embodiment, the phase information may be a phase arrival error (phase arrival error, PAE), and the phase information may also be referred to as a phase calibration quantity. A calculation formula of the PAE may be as follows:

$$PAE_i = POA_i - POA_{true\_i}$$

$$POA_{true\_i} = \frac{d_i}{\lambda} \times 2\pi$$

$POA_i$ may represent a measured phase value obtained by the terminal device by measuring a reference signal from an $i^{th}$ network device, $POA_{true\_i}$ represents an actual phase value corresponding to an actual distance between the terminal device and the $i^{th}$ network device, $d_i$ represents a distance between the terminal device and the $i^{th}$ network device, and $\lambda$ represents a carrier wavelength. In an embodiment, the $i^{th}$ network device may be the first network device.

Optionally, a calculation formula of the PAE may alternatively be as follows:

$$PAE_{ij} = PDOA_{ij} - PDOA_{true\_ij}$$

$$PDOA_{ij} = POA_i - POA_j$$

$$PDOA_{true\_ij} = \frac{(d_i - d_j)}{\lambda} \times 2\pi$$

$PDOA_{ij}$ may represent a measured phase difference between a measured phase value obtained by the terminal device by measuring a reference signal from an $i^{th}$ network device and a measured phase value obtained by the terminal device by measuring a reference signal from a $j^{th}$ network device, $PDOA_{true}$ represents an actual phase difference between an actual phase value corresponding to an actual distance between the terminal device and the $i^{th}$ network device and an actual phase value corresponding to an actual distance between the terminal device and the $j^{th}$ network device, $d_i$ and $d_j$ are respectively a distance between the terminal device and the $i^{th}$ network device and a distance between the terminal device and the $j^{th}$ network device, and $\lambda$ represent a carrier wavelength.

In a possible implementation, the measured phase value may be an instantaneous measurement value or an average value of a plurality of measurements. For example, the terminal device may separately determine a plurality of measured phase values based on a plurality of third reference signals from the first network device, and use a difference between an average value of the plurality of measured phase values and an actual phase value as the phase information reported to the location management network element.

The foregoing actual phase value may be determined in any one of the following implementations.

In a first possible implementation, the terminal device obtains, through calculation based on locations of the terminal device and the first network device, a phase corresponding to an actual distance between the terminal device and the first network device.

In a second possible implementation, the location management network element may obtain, through calculation based on locations of the terminal device and the first network device, a phase corresponding to an actual distance between the terminal device and the first network device, and send the phase to the terminal device.

S1008: The terminal device sends the phase information to the location management network element. Correspondingly, the location management network element receives the phase information from the terminal device.

It may be understood that the terminal device may transparently transmit the phase information to the location management network element through a network device (for example, an access network device), so that the location management network element determines location information of the terminal device based on the first information and the phase information.

S1009: The location management network element determines the location information of the terminal device based on the first information and the phase information.

It may be understood that, the location management network element implements the double-difference carrier phase positioning method based on the first information and the phase information. For details, refer to the detailed description of double-difference carrier phase positioning in the foregoing technical term description part. Details are not described herein again.

It should be understood that sequence numbers of the foregoing processes do not mean execution sequences in this embodiment. The execution sequences of the processes should be determined based on functions and internal logic of the processes, and should not be construed as any limitation on the implementation processes of embodiments of this application.

In the solution provided in this embodiment, a downlink beacon-free double-difference carrier phase positioning method is designed. Specifically, reference signals may be received and sent between network devices (for example, base stations) on a reserved resource, to form self-loopback, the first information (for example, the phase calibration quantity PAE) is determined based on the received reference signals and reported to the location management network element, and the terminal device determines the phase information by measuring the third reference signal and reports the phase information to the location management network element, so that the location management network element can perform double-difference carrier phase solving based on the first information and the phase information, to implement positioning of the terminal device. Therefore, in this embodiment of this application, different network devices may be separately considered as beacons/reference stations to achieve a beacon-free objective, to implement beacon-free double-difference carrier phase positioning, thereby reducing complexity of double-difference carrier phase positioning.

The following describes communication apparatuses provided in embodiments of this application.

In embodiments of this application, the communication apparatus may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

FIG. 11 is a diagram of a structure of a communication apparatus according to an embodiment of this application. As shown in FIG. 11, a communication apparatus 1100 may be configured to perform a process performed by the first network device in embodiments shown in FIG. 6 to FIG. 10. For details, refer to related descriptions in the foregoing method embodiments.

The communication apparatus 1100 at least includes a transceiver unit 1101 and a processing unit 1102. The transceiver unit 1101 may implement a corresponding communication function, and the processing unit 1102 is configured to process data. The transceiver unit 1101 may also be referred to as a communication interface or a communication unit.

Optionally, the communication apparatus 1100 may further include a storage module. The storage module may be configured to store instructions and/or data. The processing unit 1102 may read the instructions and/or the data in the storage module, so that the communication apparatus implements the foregoing method embodiments. The storage module may be implemented by using at least one memory.

The communication apparatus 1100 may be configured to perform the actions performed by the first network device in embodiments shown in FIG. 6 to FIG. 10. The communication apparatus 1100 may be the first network device or a component that may be configured in the first network device. The processing unit 1102 is configured to perform processing-related operations on the first network device side in embodiments shown in FIG. 8 to FIG. 10. Optionally, the transceiver unit 1101 is configured to perform receiving and sending-related operations on the first network device side in embodiments shown in FIG. 8 to FIG. 10.

Optionally, the transceiver unit 1101 may include a sending unit and a receiving unit. The sending unit is configured to perform sending operations in embodiments shown in FIG. 8 to FIG. 10. The receiving unit is configured to perform receiving operations in embodiments shown in FIG. 8 to FIG. 10.

It should be noted that the communication apparatus 1100 may include the sending unit, but does not include the receiving unit. Alternatively, the communication apparatus 1100 may include the receiving unit, but does not include the sending unit. This may be specifically determined depending on whether the foregoing solution performed by the communication apparatus 1100 includes a sending action and a receiving action. The communication apparatus 1100 is configured to perform the actions performed by the first network device in embodiments shown in FIG. 8 to FIG. 10.

In a possible implementation, the communication apparatus 1100 may be the first network device, or may be an apparatus (for example, a chip, a chip system, or a circuit) in the first network device. For example, the communication apparatus 1100 is configured to perform the following solution.

The transceiver unit 1101 is configured to receive a first reference signal from a second network device.

The transceiver unit 1101 is further configured to send first information to a location management network element, where the first information is determined by measuring the first reference signal, the first information is used to calibrate a phase measurement quantity, and the phase measurement quantity is used to position a terminal device.

In an implementation, before receiving the first reference signal from the second network device, the transceiver unit 1101 is further configured to receive first request information from the location management network element, where the first request information is used to request to measure the first reference signal.

In an implementation, when receiving the first reference signal from the second network device, the transceiver unit 1101 is specifically configured to receive the first reference signal from the second network device on a reserved resource, where the reserved resource is a gap GAP symbol in a reserved slot.

In an implementation, the transceiver unit 1101 is further configured to send a reference signal to the second network device, where the second network device is the first network device or a network device other than the first network device.

In an implementation, before sending the reference signal to the second network device, the transceiver unit 1101 is further configured to receive indication information from the location management network element, where the indication information indicates the first network device to send the reference signal to the second network device.

In an implementation, the transceiver unit 1101 is further configured to receive a second reference signal from the terminal device.

The communication apparatus further includes:

a processing unit 1102, configured to measure the second reference signal to obtain phase information, and

the transceiver unit 1101, further configured to send the phase information to the location management network element.

In an implementation, the transceiver unit 1101 is further configured to receive second request information from the location management network element, where the second request information is used to request to measure the second reference signal from the terminal device.

In an implementation, the first information is a difference between an actual phase value and a measured phase value obtained by the first network device by measuring the first reference signal, and the actual phase value is a phase corresponding to an actual distance between a different network device and the first network device.

In an implementation, the measured phase value is an instantaneous measurement value or an average value of a plurality of measurements.

In an implementation, the first information is a PAE.

In an implementation, the first reference signal includes one or more of the following: an SRS, a PRS, and a RIM-RS.

In a possible implementation, the communication apparatus 1100 may be the location management network element, or may be an apparatus (for example, a chip, a chip system, or a circuit) in the location management network element. For example, the communication apparatus 1100 is configured to perform the following solution.

The transceiver unit 1101 is configured to receive first information from a first network device, where the first information is determined based on a first reference signal, the first information is used to calibrate a phase measurement quantity, and the phase measurement quantity is used to position a terminal device.

The processing unit 1102 is configured to determine location information of the terminal device based on the first information.

In an implementation, the communication apparatus further includes:

before the receiving unit receives the first information from the first network device, the transceiver unit 1101 is further configured to send first request information to the first network device, where the first request information is used to request to measure the first reference signal.

In an implementation, the transceiver unit 1101 is further configured to send indication information to the first network device, where the indication information indicates the first network device to send a reference signal to a second network device, and the second network device is the first network device or a network device other than the first network device.

In an implementation, the transceiver unit 1101 is further configured to receive phase information from the first network device, where the phase information is determined based on the second reference signal; and

when determining the location information of the terminal device based on the first information, the processing unit 1102 is specifically configured to determine the location information of the terminal device based on the first information and the phase information.

In an implementation, the transceiver unit 1101 is further configured to send second request information to the first network device, where the second request information is used to request to measure the second reference signal from the terminal device.

In an implementation, the transceiver unit 1101 is further configured to receive, from the terminal device, phase information obtained by measuring a third reference signal; and

when determining the location information of the terminal device based on the first information, the processing unit 1102 is specifically configured to determine the location information of the terminal device based on the first information and the phase information.

In an implementation, the transceiver unit 1101 is further configured to send third request information to the terminal device, where the third request information is used to request the terminal device to measure the third reference signal.

In an implementation, the first information is a difference between an actual phase value and a measured phase value obtained by the first network device by measuring the first reference signal, and the actual phase value is a phase corresponding to an actual distance between a different network device and the first network device.

In an implementation, the measured phase value is an instantaneous measurement value or an average value of a plurality of measurements.

In an implementation, the first information is a PAE.

In an implementation, the first reference signal includes one or more of the following: an SRS, a PRS, and a RIM-RS.

It should be understood that a specific process in which the modules perform the foregoing corresponding processes has been described in detail in the foregoing method embodiments. For brevity, details are not described herein again.

The processing unit 1102 in the foregoing embodiments may be implemented by at least one processor or a processor-related circuit. The transceiver unit 1101 may be implemented by a transceiver or a transceiver-related circuit.

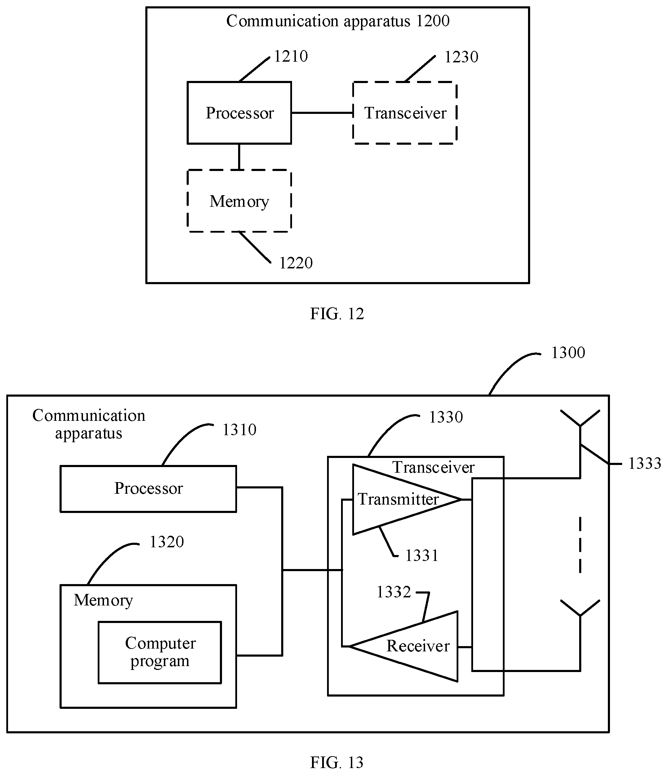

FIG. 12 is a diagram of a structure of another communication apparatus according to an embodiment of this application. As shown in FIG. 12. A communication apparatus 1200 includes a processor 1210. The processor 1210 is coupled to a memory 1220. The memory 1220 is configured to store a computer program or instructions and/or data. The processor 1210 is configured to execute the computer program or the instructions and/or the data stored in the memory 1220, so that the methods in the foregoing method embodiments are performed.

Optionally, the communication apparatus 1200 includes one or more processors 1210.

Optionally, as shown in FIG. 12, the communication apparatus 1200 may further include the memory 1220.

Optionally, the communication apparatus 1200 may include one or more memories 1220.

Optionally, the memory 1220 may be integrated with the processor 1210, or separately disposed.

Optionally, as shown in FIG. 12, the communication apparatus 1200 may further include a transceiver 1230, including a transmitter and a receiver. The transceiver 1230 is configured to receive and/or send a signal. For example, the processor 1210 is configured to control the transceiver 1230 to receive the signal and/or send the signal.

Optionally, when the communication apparatus 1200 is a chip, the transceiver 1230 is an input/output interface of the chip. In the method embodiments, sending corresponds to outputting, and receiving corresponds to inputting. The memory may be located outside the chip, or may be located inside the chip.

In another solution, the communication apparatus 1200 is configured to implement an operation performed by the first network device in the foregoing method embodiments.

For example, the processor 1210 is configured to implement a processing-related operation performed by the first network device in the foregoing method embodiments, and the transceiver 1230 is configured to implement receiving and sending-related operations performed by the first network device in the foregoing method embodiments.

In a solution, the communication apparatus 1200 is configured to implement an operation performed by the location management network element in the foregoing embodiments.

For example, the processor 1210 is configured to implement a processing-related operation performed by the location management network element in the foregoing method embodiments, and the transceiver 1230 is configured to implement receiving and sending-related operations performed by the location management network element in the foregoing method embodiments.

FIG. 13 is a diagram of a structure of still another communication apparatus according to an embodiment of this application. As shown in FIG. 13, an apparatus 1300 may include one or more processors 1310. The processor 1310 may also be referred to as a processing unit, and may implement a specific control function. The processor 1310 may be a general-purpose processor or a dedicated processor. For example, the processor 1310 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 1310 may also store instructions and/or data, and the instructions and/or the data may be run by the processor, so that the apparatus 1300 performs the method described in the foregoing method embodiments.

In another optional design, the processor 1310 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 1300 may include a circuit, and the circuit may implement the sending, receiving, or communication function in the foregoing method embodiments.

Optionally, the apparatus 1300 may include one or more memories 1320, and the memory may store a computer program or instructions. The computer program or the instructions may be run on the processor, so that the apparatus 1300 performs the method described in the foregoing method embodiments. The processor 1310 and the memory 1320 may be separately disposed, or may be integrated together.

Optionally, the apparatus 1300 may further include a transceiver 1330 and/or an antenna 1333. The transceiver 1330 may be referred to as a transceiver unit, a transceiver machine, a transceiver circuit, a transceiver apparatus, a transceiver module, or the like, and is configured to implement a transceiver function.

Optionally, the transceiver 1330 may include a transmitter 1331 and a receiver 1332, which are respectively configured to implement sending and receiving operations of a corresponding device in the method embodiments.

Optionally, the apparatus 1300 in this embodiment of this application may be configured to perform the method described in FIG. 6 to FIG. 10 in embodiments of this application.

In an embodiment, the communication apparatus 1300 may be a first network device, or may be an apparatus (for example, a chip, a chip system, or a circuit) in the first network device. When the computer program instructions stored in the memory 1320 are executed, the processor 1310 is configured to perform an operation performed by the processing unit 1102 in the foregoing embodiments. The transceiver 1330 is configured to perform an operation performed by the transceiver unit 1101 in the foregoing embodiments. The transceiver 1330 is further configured to send information to a communication apparatus other than the communication apparatus. The first network device or the apparatus in the first network device may be further configured to perform the methods performed by the first network device in the method embodiments in FIG. 6 to FIG. 10. Details are not described again.

In an embodiment, the communication apparatus 1300 may be a location management network element, or may be an apparatus (for example, a chip, a chip system, or a circuit) in the location management network element. When the computer program instructions stored in the memory 1320 are executed, the processor 1310 is configured to perform an operation performed by the processing unit 1102 in the foregoing embodiments. The transceiver 1330 is configured to perform an operation performed by the transceiver unit 1101 in the foregoing embodiments. The transceiver 1330 is further configured to receive information from a communication apparatus other than the communication apparatus. The location management network element or the apparatus in the location management network element may be further configured to perform various methods performed by the location management network element in the method embodiments in FIG. 6 to FIG. 10. Details are not described again.

The processor and the transceiver that are described in this application may be implemented on an integrated circuit (integrated circuit, IC), an analog IC, a radio frequency integrated circuit (radio frequency interface chip, RFIC), a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a first communication device or a second communication device. However, a range of the apparatus described in this application is not limited thereto, and a structure of the apparatus may not be limited to FIG. 13. The apparatus may be an independent device, or may be a part of a larger device. For example, the apparatus may be:

(1) an independent integrated circuit IC, a chip, a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

An embodiment of this application further provides a computer-readable storage medium, and the computer-readable storage medium stores a computer program. When the program is executed by the processor, a procedure related to the first network device in the positioning information reporting method provided in the foregoing method embodiments may be implemented.

An embodiment of this application further provides a computer-readable storage medium, and the computer-readable storage medium stores a computer program. When the program is executed by the processor, a procedure related to the location management network element in the positioning information reporting method provided in the foregoing method embodiments may be implemented.

An embodiment of this application further provides a computer program product including instructions. When the instructions are run on a computer or a processor, the computer or the processor is enabled to perform one or more steps in any one of the foregoing positioning information reporting methods. When each of component modules of the foregoing device is implemented in a form of a software functional unit and is sold or used as an independent product, the component modules may be stored in the computer-readable storage medium.

An embodiment of this application further provides a chip apparatus, including a processor, configured to invoke a computer program or computer instructions stored in a memory, so that the processor performs the method in embodiments shown in FIG. 6 to FIG. 10.

In a possible implementation, an input of the chip apparatus corresponds to receiving operations in embodiments shown in FIG. 6 to FIG. 10, and an output of the chip apparatus corresponds to sending operations in embodiments shown in FIG. 6 to FIG. 10.

Optionally, the processor is coupled to the memory through an interface.

Optionally, the chip apparatus further includes the memory. The memory stores the computer program or the computer instructions.

The chip apparatus may include a chip, or may include a chip and another discrete component.

An embodiment of this application further provides a communication system. The system includes a first network device and a location management network element. For specific descriptions, refer to the positioning information reporting methods shown in FIG. 6 to FIG. 10.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be further understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

Persons of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

A sequence of the steps of the method in embodiments of this application may be adjusted, combined, or removed based on an actual requirement.

The modules/units in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

Claims

1.  A positioning information reporting method, comprising:

    receiving, by a first network device, a first reference signal from a second network device; and
    sending, by the first network device, first information to a location management network element, wherein the first information is determined based on the first reference signal, the first information is used to calibrate a phase measurement quantity, and the phase measurement quantity is used to position a terminal device.

2.  The method according to claim 1, wherein before the receiving, by a first network device, a first reference signal from a second network device, the method further comprises:
    sending, by the location management network element, first request information to the first network device, wherein the first request information is used to request to measure the first reference signal.

3.  The method according to claim 1 or 2, wherein the receiving, by a first network device, a first reference signal from a second network device comprises:
    receiving, by the first network device, the first reference signal from the second network device on a reserved resource, wherein the reserved resource is a gap GAP symbol in a reserved slot.

4.  The method according to any one of claims 1 to 3, wherein the method further comprises:
    sending, by the first network device, a reference signal to the second network device, wherein the second network device is the first network device or a network device other than the first network device.

5.  The method according to claim 4, wherein before the sending, by the first network device, a reference signal to the second network device, the method further comprises:
    sending, by the location management network element, indication information to the first network device, wherein the indication information indicates the first network device to send the reference signal to the second network device.

6.  The method according to any one of claims 1 to 5, wherein the method further comprises:
    determining, by the location management network element, location information of the terminal device based on the first information.

7.  The method according to claim 6, wherein the method further comprises:

    receiving, by the first network device, a second reference signal from the terminal device;
    measuring, by the first network device, the second reference signal to obtain phase information;
    sending, by the first network device, the phase information to the location management network element; and
    the determining, by the location management network element, location information of the terminal device based on the first information comprises:
    determining, by the location management network element, the location information of the terminal device based on the first information and the phase information.

8.  The method according to claim 7, wherein the method further comprises:
    sending, by the location management network element, second request information to the first network device, wherein the second request information is used to request to measure the second reference signal from the terminal device.

9.  The method according to claim 6, wherein the method further comprises:

    receiving, by the location management network element from the terminal device, phase information obtained by measuring a third reference signal; and
    the determining, by the location management network element, location information of the terminal device based on the first information comprises:
    determining, by the location management network element, the location information of the terminal device based on the first information and the phase information.

10. The method according to claim 9, wherein the method further comprises:
    sending, by the location management network element, third request information to the terminal device, wherein the third request information is used to request the terminal device to measure the third reference signal.

11. The method according to any one of claims 1 to 10, wherein the first information is a difference between an actual phase value and a measured phase value obtained by the first network device by measuring the first reference signal, and the actual phase value is a phase corresponding to an actual distance between the second network device and the first network device.

12. The method according to claim 11, wherein the measured phase value is an instantaneous measurement value or an average value of a plurality of measurements.

13. The method according to claim 12, wherein the first information is a phase arrival error PAE.

14. The method according to any one of claims 1 to 13, wherein the first reference signal comprises one or more of the following: a sounding reference signal SRS, a positioning reference signal PRS, and a remote interference management reference signal RIM-RS.

15. A communication apparatus, comprising:

a transceiver unit, configured to receive a first reference signal from a second network device, wherein the transceiver unit is further configured to send first information to a location management network element, wherein the first information is determined based on the first reference signal, the first information is used to calibrate a phase measurement quantity, and the phase measurement quantity is used to position a terminal device.

16. The apparatus according to claim 15, wherein before receiving the first reference signal from the second network device, the transceiver unit is further configured to send first request information to the first network device, wherein the first request information is used to request to measure the first reference signal.

17. The apparatus according to claim 15 or 16, wherein when receiving the first reference signal from the second network device, the transceiver unit is specifically configured to:
receive the first reference signal from the second network device on a reserved resource, wherein the reserved resource is a gap GAP symbol in a reserved slot.

18. The apparatus according to any one of claims 15 to 17, wherein the transceiver unit is further configured to send a reference signal to the second network device, wherein the second network device is the first network device or a network device other than the first network device.

19. The apparatus according to claim 18, wherein before sending the reference signal to the second network device, the transceiver unit is further configured to send indication information to the first network device, wherein the indication information indicates the first network device to send the reference signal to the second network device.

20. The apparatus according to any one of claims 15 to 19, wherein the apparatus further comprises:
a processing unit, configured to determine location information of the terminal device based on the first information.

21. The apparatus according to claim 20, wherein the transceiver unit is further configured to receive a second reference signal from the terminal device;

the processing unit is further configured to measure the second reference signal to obtain phase information;
the transceiver unit is further configured to send the phase information to the location management network element; and
when determining the location information of the terminal device based on the first information, the processing unit is specifically configured to:
determine the location information of the terminal device based on the first information and the phase information.

22. The apparatus according to claim 21, wherein the transceiver unit is further configured to send second request information to the first network device, wherein the second request information is used to request to measure the second reference signal from the terminal device.

23. The apparatus according to claim 20, wherein the transceiver unit is further configured to receive, from the terminal device, phase information obtained by measuring a third reference signal; and
when determining the location information of the terminal device based on the first information, the processing unit is specifically configured to:
determine the location information of the terminal device based on the first information and the phase information.

24. The apparatus according to claim 23, wherein the transceiver unit is further configured to send third request information to the terminal device, wherein the third request information is used to request the terminal device to measure the third reference signal.

25. The apparatus according to any one of claims 15 to 24, wherein the first information is a difference between an actual phase value and a measured phase value obtained by the first network device by measuring the first reference signal, and the actual phase value is a phase corresponding to an actual distance between the second network device and the first network device.

26. The apparatus according to claim 25, wherein the measured phase value is an instantaneous measurement value or an average value of a plurality of measurements.

27. The apparatus according to claim 26, wherein the first information is a phase arrival error PAE.

28. The apparatus according to any one of claims 15 to 27, wherein the first reference signal comprises one or more of the following: a sounding reference signal SRS, a positioning reference signal PRS, and a remote interference management reference signal RIM-RS.

29. A communication apparatus, comprising a processor, wherein the processor is configured to execute a computer program or instructions in a memory, and when the computer program or the instructions are executed by the processor, the apparatus is enabled to perform the method according to any one of claims 1 to 14.

30. The apparatus according to claim 29, wherein the communication apparatus further comprises the memory.

31. A computer-readable storage medium, wherein the computer-readable storage medium stores a computer program or computer instructions, and when the computer program or the computer instructions are run by a processor, the method according to any one of claims 1 to 14 is implemented.

32. A positioning system, comprising a first network device, configured to perform a method performed by the first network device in the method according to any one of claims 1 to 14, wherein the positioning system further comprises a location management network element, configured to perform a method performed by the location management network element in the method according to any one of claims 1 to 14.

FIG. 1

FIG. 2

304

Core network

302

303

301

Uu

Uu

FIG. 3

FIG. 4

FIG. 5

| Terminal device | Second network device | First network device | Location management network element |
|---|---|---|---|

S601: First request information used to request to measure a first reference signal

S602: First reference signal

S603: Determine first information based on the first reference signal

S604: First information

S605: Second request information used to request to measure a second reference signal from the terminal device

S606: Second reference signal

S607: Measure the second reference signal to obtain phase information

S608: Phase information

S609: Determine location information of the terminal device based on the first information and the phase information

FIG. 6

pRRU

BB

RF

RF

RF

RF

FIG. 7

The pRRU 1 is
similar to a beacon

pRRU 1

pRRU 2

Four
channels

Four
channels

Four for
receiving

One for
sending and
three for
receiving

SRS

SRS

Terminal
device

pRRU 3

pRRU 4

SRS

SRS

Four
channels

Four
channels

Four for
receiving

Four for
receiving

FIG. 8

EP 4 622 362 A1

| Slot configuration | D | D | D | D | D | D | D | S | U | U |
|---|---|---|---|---|---|---|---|---|---|---|

| Channel 1 of a pRRU 1 | D | D | D | D | D | D | D | RS | GP | U | U | U | U | U |
|---|---|---|---|---|---|---|---|---|---|---|---|---|---|---|

| pRRU 2 to pRRU 4 | D | D | D | D | D | GP | GP | U | U | U | U | U | U | U |
|---|---|---|---|---|---|---|---|---|---|---|---|---|---|---|

The pRRU 1 is used as a beacon, a downlink reference signal is sent on a GP through the channel 1, and the reference signal is uplink-received on the GP through other channels

To-be-measured terminal device: SRS

FIG. 9

| Terminal device | Second network device | First network device | Location management network element |
|---|---|---|---|

S1001: First request information used to request to measure a first reference signal

S1002: First reference signal

S1003: Determine first information based on the first reference signal

S1004: First information

S1005: Third request information used to request the terminal device to measure a third reference signal

S1006: Third reference signal

S1007: Measure the third reference signal to obtain phase information

S1008: Phase information

S1009: Determine location information of the terminal device based on the first information and the phase information

FIG. 10

Communication apparatus 1100

| Transceiver unit | 1101 | Processing unit | 1102 |
|---|---|---|---|

FIG. 11

Communication apparatus 1200

1210

Processor

1230

Transceiver

Memory

1220

FIG. 12

1300

Communication apparatus

1310

Processor

1320

Memory

Computer program

1330

Transceiver

Transmitter

1331

1332

Receiver

1333

FIG. 13

## INTERNATIONAL SEARCH REPORT

| International application No. |
| --- |
| **PCT/CN2023/136685** |

### A. CLASSIFICATION OF SUBJECT MATTER

H04W 64/00(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

DWPI, ENTXT, CNKI, CNTXT, 3GPP: 定位, 参考信号, 定位管理网元, 相位, 校准, 间隙, positioning, SRS, PRS, RIM-RS, phase, adjust, gap, LMF, LMC

### C. DOCUMENTS CONSIDERED TO BE RELEVANT

| Category* | Citation of document, with indication, where appropriate, of the relevant passages | Relevant to claim No. |
| --- | --- | --- |
| X | WO 2022141592 A1 (HUAWEI TECHNOLOGIES CO., LTD.) 07 July 2022 (2022-07-07) description, page 8, line 10-page 19, line 35 | 1-32 |
| A | CN 114071704 A (PURPLE MOUNTAIN LABORATORIES FOR NETWORK AND COMMUNICATION SECURITY) 18 February 2022 (2022-02-18) entire document | 1-32 |
| A | US 2022086822 A1 (QUALCOMM INC.) 17 March 2022 (2022-03-17) entire document | 1-32 |
| A | WO 2022126088 A1 (QUALCOMM INC.) 16 June 2022 (2022-06-16) entire document | 1-32 |
| A | VIVO. "Discussion on support for positioning reference unit" *3GPP TSG-RAN WG2 Meeting #115 electronic, R2-2107647*, 27 August 2021 (2021-08-27), entire document | 1-32 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 February 2024** | **01 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/136685**

| Patent document cited in search report | | | Publication date (day/month/year) | Patent family member(s) | | | Publication date (day/month/year) |
|---|---|---|---|---|---|---|---|
| WO | 2022141592 | A1 | 07 July 2022 | CN | 116648964 | A | 25 August 2023 |
| CN | 114071704 | A | 18 February 2022 | None | | | |
| US | 2022086822 | A1 | 17 March 2022 | EP | 4211482 | A1 | 19 July 2023 |
| | | | | KR | 20230066336 | A | 15 May 2023 |
| | | | | WO | 2022056256 | A1 | 17 March 2022 |
| | | | | CN | 116457681 | A | 18 July 2023 |
| WO | 2022126088 | A1 | 16 June 2022 | KR | 20230118559 | A | 11 August 2023 |
| | | | | JP | 2023553884 | A | 26 December 2023 |
| | | | | EP | 4260079 | A1 | 18 October 2023 |
| | | | | US | 2023408627 | A1 | 21 December 2023 |

Form PCT/ISA/210 (patent family annex) (July 2022)

REFERENCES CITED IN THE DESCRIPTION

**Patent documents cited in the description**

- CN 202211625809